# EUROPEAN PATENT APPLICATION

(11) **EP 4 807 206 A1**
(43) Date of publication of application: **16.09.2026**
(21) Application number: 26163370.5
(22) Date of filing: 09.03.2026
(51) Int. Cl.: F16C 33/04

(54) **IMPROVED SLEWING BEARING**

(30) Priority: 10.03.2025 IT 202500004884
(71) Applicant: FPT Industrial S.p.A., 10156 Torino (IT)
(72) Inventor: LAFIANDRA, Michele, 10156 TORINO (IT); CACUCCI, Simone, 10156 TORINO (IT)
(74) Representative: Studio Torta S.p.A.

(57) **Abstract**

A slewing bearing (7) for axially supporting a rotating shaft (4) around a respective axis (A) with respect to a fixed portion (3) in an operating system (1), the slewing bearing (7) comprising an annular portion (7a) sized to be housed around the rotating shaft (4), the annular portion (7a) defining a first face (8) and a second face (9) opposite to each other and in contact respectively, in use, with the fixed portion (3) and the rotating shaft (4),
the slewing bearing (7) comprising at least one channel (11) formed in the second face (9) defining a path (11a) between at least a first passage (11') formed in proximity to an internal radial edge of the annular portion (7a) and a second passage (11") formed in proximity to an external radial edge of the annular portion (7a).

## Description

### CROSS-REFERENCE TO RELATED APPLICATIONS

This patent application claims priority from Italian patent application no. 102025000004884 filed on March 10, 2025, the entire disclosure of which is incorporated herein by reference.

### TECHNICAL FIELD

The present invention concerns a slewing bearing, in particular an axial support slewing bearing.

The present invention is preferably, although not exclusively, applied in the support of a drive shaft, such as supporting the drive shaft in an internal combustion engine. This application will be referred to below by way of example.

### PRIOR ART

Rotating shafts require support in order to allow them to rotate with respect to their relative support.

If axial loads are present along the rotation axis of the shaft, it is known that rotating axial supports have to be provided.

An example of said axial support is an axial bearing such as a slewing bearing, interposed between the support and an axial surface of the rotating shaft.

An example of a rotating shaft supported by slewing bearings is the crankshaft in an internal combustion engine. In fact, the crankshaft in an internal combustion engine is rotatingly supported with respect to the crankcase and is subject to considerable friction.

For said purpose, it is common practice to lubricate said slewing bearings so as to allow correct movement of the rotating shaft and prevent overheating or even potential seizure.

Said lubrication is carried out by distribution of a lubricating fluid thanks to the centrifugal force due to the rotation of the rotating shaft.

However, the distribution of said lubricating fluid between slewing bearing and rotating shaft is difficult due to the axial compaction between said elements.

Furthermore, if the lubricating shaft has to start rotating after a stoppage, the lubricating fluid is clearly not present in a sufficient quantity since it is distributed by means of the centrifugal force, as described above, and by the lubrication circuit which takes a certain time to fill at start-up.

Therefore, the possibility of malfunctions is greatly increased during start-up of the drive shaft rotation.

The need is therefore felt to improve the existing slewing bearings to allow optimized lubrication without increasing the dimensions and production costs thereof.

The object of the present invention is to meet the above needs in an optimized and inexpensive manner.

### SUMMARY OF THE INVENTION

The above-mentioned object is achieved by a slewing bearing and an operating system as claimed in the attached claims forming an integral part of the present description.

### BRIEF DESCRIPTION OF THE DRAWINGS

For a better understanding of the present invention a preferred embodiment is described below, by way of nonlimiting example and with reference to the attached drawings in which:

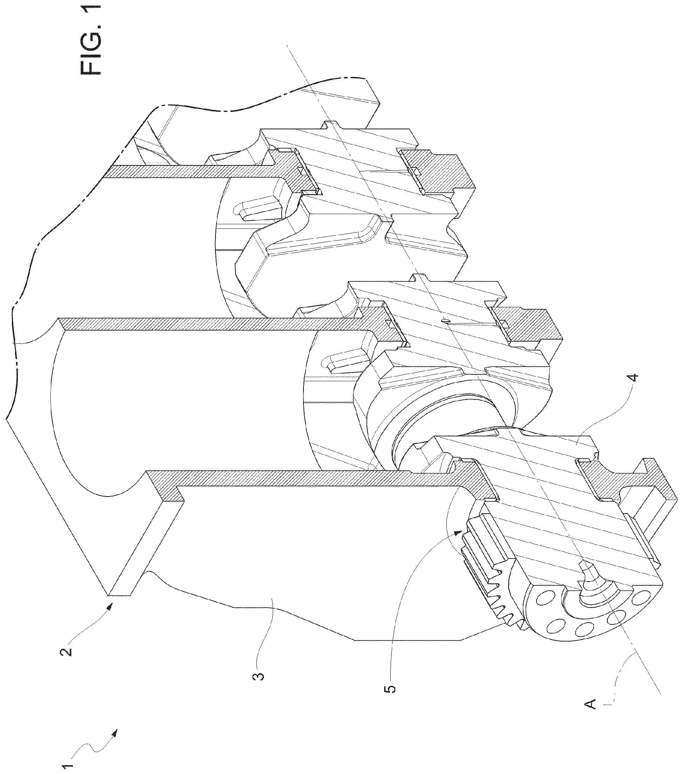

- Figure 1 is a perspective view, with parts removed for clarity, of a portion of an operating system comprising a slewing bearing according to the invention;
- Figure 2 is an enlarged view with parts removed for clarity of the operating system of Figure 1;
- Figure 3 is a schematic view in lateral section of a portion of the operating system of Figure 1;
- Figure 3A is an enlarged view of a portion of Figure 3;
- Figure 4 is a front view of a slewing bearing according to the invention; and
- Figures 4A and 4B are enlarged views of portions of the slewing bearing of Figure 4A.

### DETAILED DISCLOSURE OF THE INVENTION

In the attached figures the number 1 generally indicates an operating system using a rotating shaft 4 rotating with respect to its own longitudinal axis A.

In particular, in the case illustrated, the operating system 1 is represented by a powertrain 2, such as an internal combustion engine. In this case, the rotating shaft 4 is rotationally supported in a free manner by a crankcase 3 of the powertrain 2.

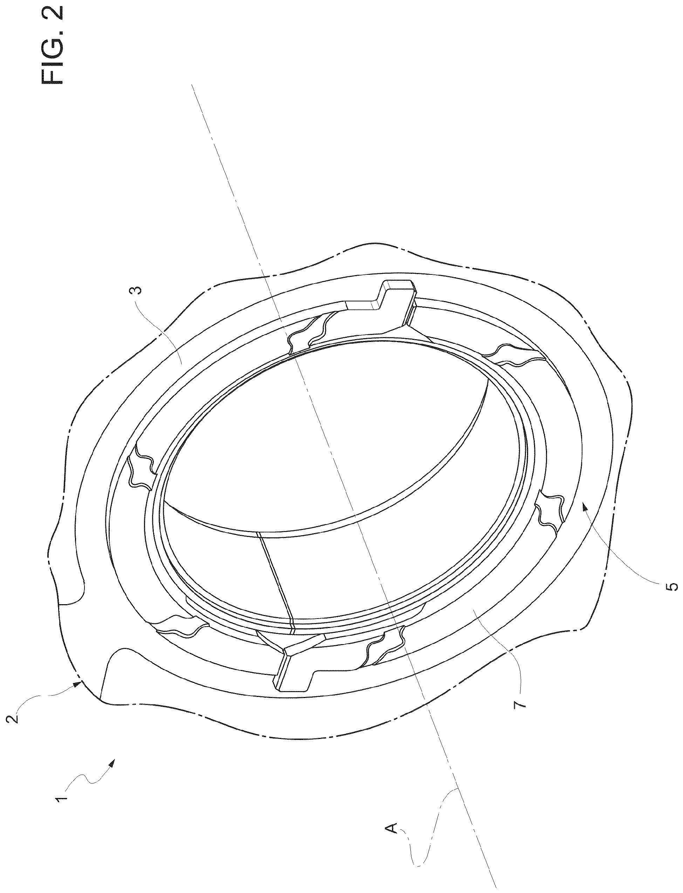

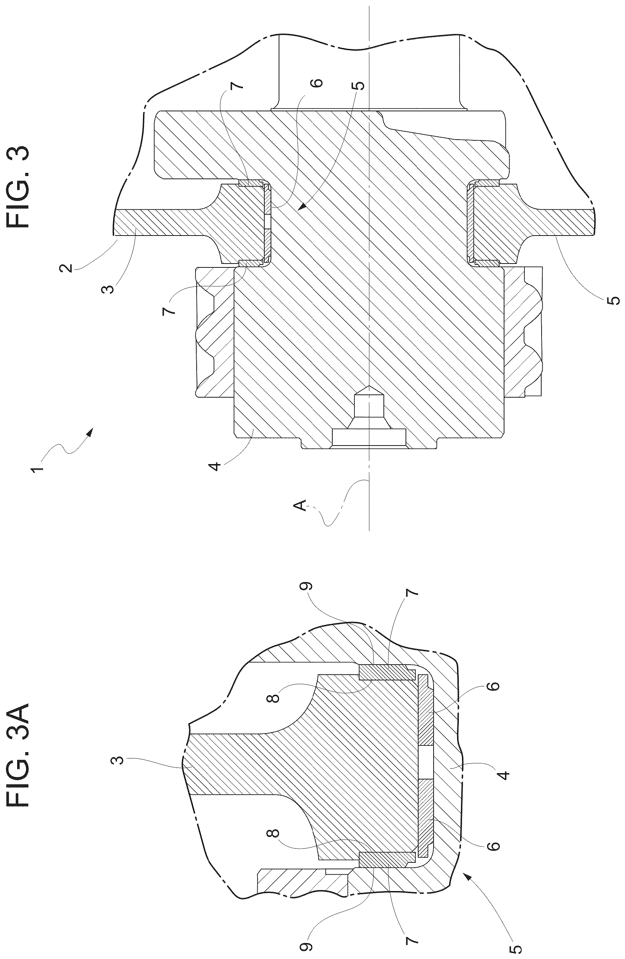

In detail, the rotating shaft 4 is supported with respect to the crankcase 3, in which it is housed in a respective opening which can be seen in figures 2 and 3, by a support system 5.

The support system 5 is configured to allow radial and axial support for the rotating shaft 4 with respect to the crankcase 3.

Advantageously, therefore, the support system 5 comprises a radial support device 6 such as, for example, a bush, illustrated in detail in Figures 3, 3A. Since this element is known per se, it will not be further described for the sake of brevity.

The support system 5 further comprises at least one axial support device 7, in the embodiment described a pair of axial support devices 7 located on opposite parts of a portion of crankcase 3 to support two sides of the rotating shaft 4.

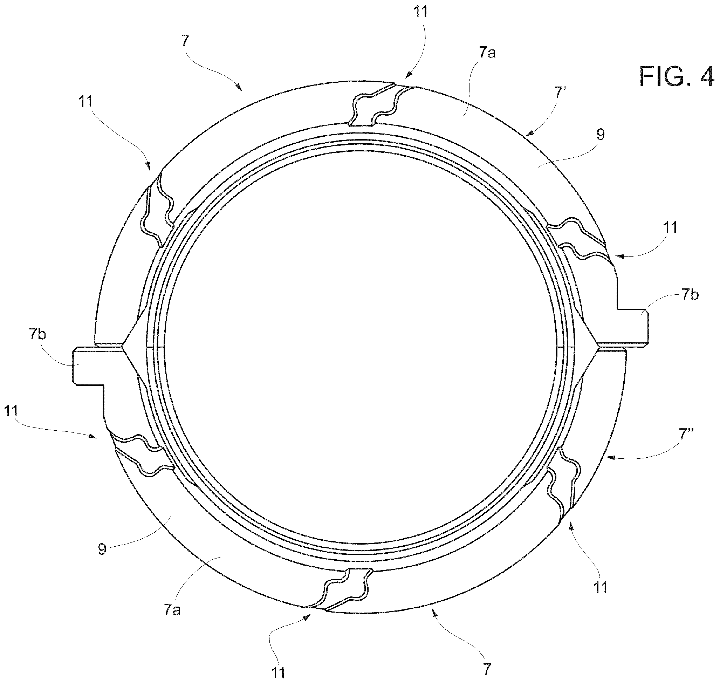

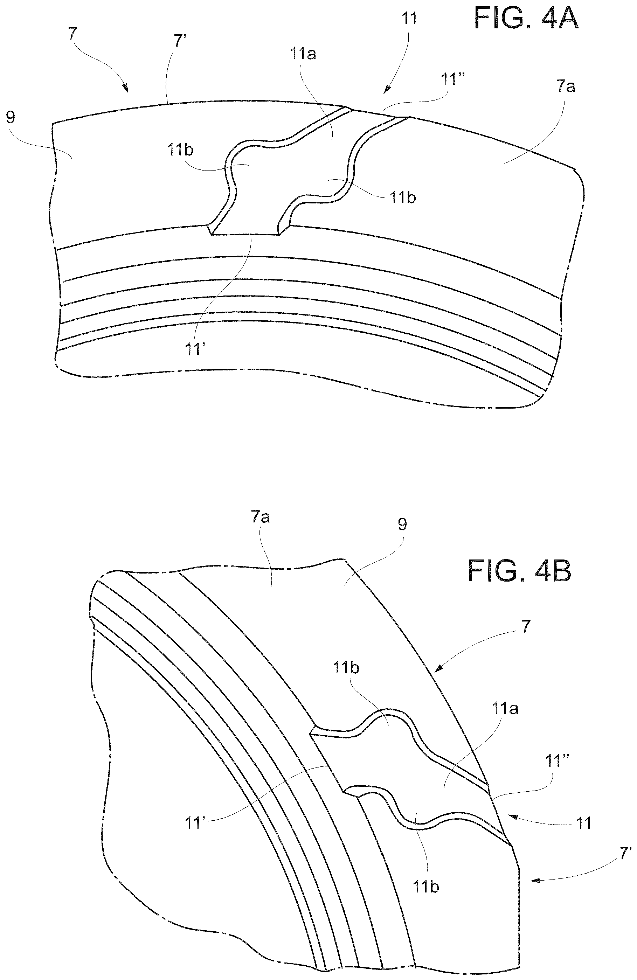

The axial support device 7 advantageously comprises a slewing bearing, better illustrated in Figures 2, 4, 4A, 4B.

As can be seen, in the embodiment described, the slewing bearing 7 comprises an annular portion 7a configured to be housed around the rotating shaft 6 and an anchoring portion 7b configured to prevent a movement of the slewing bearing 7 with respect to the crankcase 3.

In the embodiment described, the anchoring portion 7b extends radially with respect to the annular portion 7a so as to be inserted in a seat formed in the crankcase 3.

Advantageously, in the embodiment illustrated, the slewing bearing 7 is made in two portions 7', 7'' separate from each other and advantageously having a similar shape.

In further detail, said portions 7', 7'' are symmetrical with respect to the longitudinal axis A of the rotating shaft 4.

Again in the particular case described, the anchoring portions 7b advantageously extend from circumferential ends of the first and second portion 7', 7'', in particular opposite each other.

As can be seen better in Figure 3, 3A the annular portion 7a of the slewing bearing 7 is a substantially flat annular wall defining a first face 8 and a second face 9 respectively in contact, in use, with the crankcase 3 and with the rotating shaft **4.**

Preferably, the annular portion 7a is made of metallic material such as steel, and the second face 9 is surface-machined and/or provided with a surface layer adapted to facilitate the relative sliding between the annular portion 7a and the rotating shaft **4.**

Advantageously, the slewing bearing 7 is provided with at least one channel 11 radially crossing the annular portion 7a.

Preferably, the channel 11 passes through between an internal radial edge and an external radial edge of the annular portion 7a and furthermore it does not pass through the annular portion 7a in an axial direction. Consequently, the channel 11 is like a recess in the main body of the annular portion 7a.

Advantageously, the slewing bearing 7 is provided with a plurality of channels 11, advantageously circumferentially spaced and in particular equally spaced between one another. In the case described there are six, advantageously in the particular case illustrated three for each first and second portion 7', 7".

Preferably, the channels 11 have the same shape as one another.

Advantageously, each channel 11 comprises a path 11a defined between at least a first passage 11' formed at the internal radial edge of the annular portion 7a and at least a second passage 11'' formed at the external radial edge of the annular portion 7a.

In the embodiment described, there are a single first and a single second passage 11', 11''.

Advantageously, said first and second passage 11', 11'' are staggered from each other in a circumferential direction.

In other words, the path 11a defined by the channel 11 between the first and the second passage 11' is inclined in a circumferential direction with respect to the radial direction relative to the axis A.

Advantageously, said path 11a is curved, preferably in the form of a circle arc.

Preferably, the channel 11 comprises at least an accumulation space formed between the first and the second passage 11', 11" and fluidly connected to the path 11a.

In detail, said accumulation space is defined by a bend 11b in the path 10a. Advantageously two bends 11b are provided facing each other in a circumferential direction with respect to the path 11a.

Advantageously, said bends 11b are recesses substantially shaped like a circle portion, advantageously in the shape of a semicircle, extending from the path 11a.

In detail, the at least one bend 11b is formed substantially halfway along the distance between the first and the second passage 11', 11' and in particular, if at least two, they are positioned at the same radial position between the external and internal edge of the annular body 7a.

Preferably, the first passage 11' defines a passage section in the circumferential direction greater than the passage section of the second passage 11''.

The operation of the embodiment of the slewing bearing according to the invention described above is the following, with reference to figures 3, 3A, 4A, 4B.

During the rotation of the rotating shaft 4 around the axis A, the slewing bearing 6 remains fixed to the crankcase 3 while the second face 9 cooperates in contact by sliding with a relative portion of the rotating shaft 4, supporting the axial loads thereof. The lubricating fluid contained between the support system 5, the crankcase 3 and the rotating shaft 4 tends by centrifugal force to pass from the radial support device 6 towards the radial support device 7 and therefore through the channels 11 beyond the annular wall 7a so as to allow correct lubrication between the fixed parts and the rotating parts. In said case, the lubricating fluid tends to increase its pressure thanks to the path circumferentially spaced, namely inclined/curvilinear, with respect to the first second passage 11', 11". In this way the lubrication is improved.

Said effect is further amplified if a bend 11b is present where said lubricating fluid tends to an even greater extent to accumulate before proceeding towards the relative first/second passage 11', 11''. In fact, the shape of the bend 11b is designed to increase the local fluid pressure to allow improved lubrication in the adjacent area and infiltration of the oil between the rotating shaft 4 and the slewing bearing 7.

In another operating phase, in the case of start-up of the engine, the lubricating fluid tends to remain trapped in the bend 11b allowing a movement of the drive shaft guaranteed by said presence of lubricating fluid in the bend 11b, sufficiently lubricated.

From the above, the advantages of a slewing bearing and a relative operating system according to the invention are evident.

Thanks to the slewing bearing proposed, it is possible to obtain improved lubrication without having to increase the overall dimensions or the manufacturing costs excessively.

Furthermore, the possibility of varying the inclined path of the channels and their number permits design versatility, allowing the best possible lubrication to be set.

Furthermore, the supply of at least one bend to generate a lubrication reserve allows rotation of the shaft to be started in complete safety and with guaranteed minimum lubrication. Also in this case, the possibility of varying the shape of the bend and its number permits design versatility allowing the best possible lubrication to be set also in the start-up phase.

The fact of having two bends on opposite sides of the channel in a circumferential direction, furthermore, guarantees a lubrication reservoir in any rotation direction of the rotating shaft.

Lastly it is clear that modifications and variations can be made to the slewing bearing and to the operating system according to the present invention that do not depart from the protective scope defined by the claims.

Clearly, as stated, the path described above could also be rectilinear or have a complex/labyrinthine shape.

Furthermore, the bends could have a different shape, be in a larger number or just one single bend.

Again, the passage sections could have different dimensions or be in a different number. Similarly, the channels 11 could have different dimensions and be in a different number with respect to what is described.

## Claims

1. A slewing bearing (7) for axially supporting a rotating shaft (4) around a respective axis (A) with respect to a fixed portion (3) in an operating system (1), said slewing bearing (7) comprising an annular portion (7a) sized to be housed around said rotating shaft (4), said annular portion (7a) defining a first face (8) and a second face (9) opposite to each other and in contact respectively, in use with said fixed portion (3) and said rotating shaft (4),
said slewing bearing (7) comprising at least one channel (11) formed in said second face (9) defining a path (11a) between at least a first passage (11') formed in proximity to an internal radial edge of said annular portion (7a) and a second passage (11") formed in proximity to an external radial edge of said annular portion (7a), wherein said path (11a) has a curvilinear shape or a complex/labyrinthine shape.

2. The slewing bearing according to claim 1, wherein said first passage (11') and said second passage (11") are staggered from each other in a circumferential direction with respect to said axis (A).

3. The slewing bearing according to claim 1 or 2, wherein said path (11a) is inclined with respect to a radial direction to the axis (A) between said first and said second passage (11', 11'').

4. The slewing bearing according to one of the preceding claims, wherein the passage section of said first passage (11') is different from the second passage section of said second passage (11'').

5. The slewing bearing according to one of the preceding claims, wherein the passage section of said first passage (11') is greater than the second passage section of said second passage (11").

6. The slewing bearing according to one of the preceding claims, defining a space (11b) fluidly communicating with said path (11a) between said first and second passage (11', 11").

7. The slewing bearing according to claim 6, wherein said space (11b) is a bend made in said path (11a).

8. The slewing bearing according to claim 7, comprising a pair of bends placed on opposite sides of said path (11a) in a circumferential direction.

9. The slewing bearing according to one of the preceding claims, comprising a plurality of channels (11) angularly spaced from each other and made with the same shape.

10. The slewing bearing according to one of the preceding claims, wherein said annular portion (7a) is divided into several portions (7', 7'') in a circumferential direction, separated from each other.

11. An operating system (1) comprising a fixed portion (3) housing a rotating shaft (4) supported with respect to said fixed portion (3) by means of a support system (5), said support system (5) comprising at least one slewing bearing (7) according to one of the preceding claims.

12. The operating system according to claim 11, wherein said fixed portion (3) is a crankcase of a powertrain.

13. The operating system according to claim 11 or 12, wherein said rotating shaft (4) is a crankshaft of an internal combustion engine.
